Europäisches Patentamt

European Patent Office

Office européen des brevets

(19)

(11) Veröffentlichungsnummer: **0 222 158 B1**

(12) **EUROPÄISCHE PATENTSCHRIFT**

(45) Veröffentlichungstag der Patentschrift: **27.12.91**

(51) Int. Cl.⁵: **B01D  53/34**

(21) Anmeldenummer: **86113902.0**

(22) Anmeldetag: **07.10.86**

Teilanmeldung 90125649.5 eingereicht am 07/10/86.

(54) **Verfahren zur Rückgewinnung von Kohlenwasserstoffen.**

(30) Priorität: **15.10.85 DE 3536703**
         **19.03.86 DE 3609292**

(43) Veröffentlichungstag der Anmeldung:
**20.05.87 Patentblatt  87/21**

(45) Bekanntmachung des Hinweises auf die
Patenterteilung:
**27.12.91 Patentblatt  91/52**

(84) Benannte Vertragsstaaten:
**AT BE CH DE GB LI NL SE**

(56) Entgegenhaltungen:
**DE-C- 2 337 055**
**US-A- 4 386 944**

**Chem.-Ing.-Tech. 56 (1984), Nr.4, S. 286-291,
Verlag Chemie GmbH, D-6940 Weinheim; H.J.
Schwefer und H. Weyer:"Behandlung sowie
Beseitigung der bei Lagerung und Verladung brennbarer Flüssigkeiten entstehenden Dämpfe"**

(73) Patentinhaber: **Frey, Gerhard, Dipl.-Ing.**
**Fasanenweg 17**
**W-8130 Starnberg(DE)**

(72) Erfinder: **Frey, Gerhard, Dipl.-Ing.**
**Fasanenweg 17**
**W-8130 Starnberg(DE)**

(74) Vertreter: **Patentanwälte Dr. Solf & Zapf**
**Zeppelinstrasse 53**
**W-8000 München 80(DE)**

## Beschreibung

Die Erfindung betrifft ein Verfahren zur Rückgewinnung von flüssigen Kohlenwasserstoffen gemäß dem Oberbegriff des Anspruchs 1.

In der Lösungsmittelindustrie und besonders auch beim Verladen von Treibstoffen werden zur Zeit noch größere Mengen von Lösungsmitteldämpfen bzw. Kohlenwasserstoffen mit der Abluft in die Umgebung abgegeben. Es ist bekannt, daß zur Emissionsminderung das anfallende Luft-Kohlenwasserstoff-Gemisch zunächst in Kältefallen abgekühlt und zumindest teilweise auskondensiert wird. Ein derartiges Verfahren ist beispielsweise in der DE-C-23 37 055 beschrieben. Das bekannte Verfahren hat jedoch den Nachteil, daß auch bei Anwendung sehr tiefer Temperaturen nicht alle Verunreinigungen aus dem zu reinigenden Gas abgeschieden werden und diese daher nach wie vor an die Atmosphäre abgegeben werden. Mit dem bekannten Verfahren können behördliche Vorschriften, wie sie z.B. in der TA Luft festgelegt sind, nicht eingehalten werden. Ein weiterer Nachteil ist der hohe Energieverbrauch der Kälteanlagen.

Aus der Literaturstelle: "Behandlung sowie Beseitigung der bei der Lagerung und Verladung brennbarer Flüssigkeiten entstehenden Dämpfe" von H.J. Schwefer und H. Weyer, Chem. Ing. Tech. 56 (1984) Nr. 4 S. 286-291, Verlag Chemie GmbH, D-6940 Weinheim, 1984 ist ein Verfahren nach dem Oberbegriff des Anspruchs 1 bekannt. Die Verbrennung kann mittels eines Brenners eines Prozessofens erfolgen zur Einhaltung der TA Luft.

Weiterhin beschreibt US-A-4386944 ein zweistufiges Verfahren zur Konzentration von methanhaltigem Klärgas. Dazu wird zur Gas/Gastrennung eine Membran verwendet, zu deren Betreiben ein Unterdruck mit einer Wasserdampfstrahlpumpe erzeugt wird. Der Dampf zum Betreiben dieser Strahlpumpe wird in einem Wasserdampfkessel erzeugt, der mit dem bei der Gas/Gastrennung anfallenden Restgas befeuert wird.

Der Erfindung liegt die Aufgabe zugrunde, ein Verfahren der eingangs genannten Art anzugeben, mit dem auf besonders wirtschaftliche Weise aus einem Gas Verunreinigungen, wie Kohlenwasserstoffe oder Dämpfe organischer Flüssigkeiten, weitgehend entfernt werden können. Diese Aufgabe wird durch die Merkmale des Anspruchs 1 gelöst. Vorteilhafte Weiterbildungen der Erfindung wurden in den Unteransprüchen gekennzeichnet.

Es ist ein besonderer Vorteil der Erfindung, daß das zu reinigende Gas in den aufeinanderfolgenden Reinigungsstufen so gereinigt werden kann, daß das Betreiben der ersten Reinigungsstufe ohne von außen dem System zugeführte Energie abläuft.

Die in zwei Stufen verlaufende Reinigung ist darüber hinaus, bezüglich des zu erreichenden Reinigungsgrades sehr effektiv, denn durch dieses Verfahren wird das zu reinigende Gas nahezu vollständig in verflüssigte Verunreinigungen und in gereinigtes Gas getrennt. Im Falle von Treibstoffdämpfen kann ein überwiegender Teil des Treibstoffes zur weiteren Verwendung wiedergewonnen werden, während die Abluft mit drastisch verminderten Emissionswerten entlassen werden kann.

Bei einer vorteilhaften Ausgestaltung der Erfindung wird das zu reinigende Gas in der ersten Reinigungsstufe auf eine Temperatur abgekühlt, bei der die Verunreinigungen zum überwiegenden Teil kondensieren. Das Kondensat wird in bekannter Weise vom zu reinigenden Gas abgetrennt.

Nach einer weiteren Ausgestaltung der Erfindung kann die rückgewonnene Energie zum Betreiben einer Kälteanlage verwendet werden, mit deren Hilfe das zu reinigende Gas in der ersten Reinigungsstufe abgekühlt wird.

Erfindungsgemäß werden die Nachteile der bisherigen Verfahren vermieden, indem beim erfindungsgemäßen Verfahren die Verunreinigungen der eingangs geschilderten Art auf nahezu vollständige Weise aus dem Gas entfernt werden. So können insbesondere die geltenden behördlichen Vorschriften für den Umweltschutz für die organische Gasbelastung der Luft eingehalten werden. Ein zusätzlicher Vorteil des erfindungsgemäßen Verfahrens ist die äußerst wirtschaftliche Nutzung der in der zweiten Reinigunsstufe entstehenden Energie zum Betreiben der ersten Reinigungsstufe.

Mit Vorteil wird bei einer weiteren Ausgestaltung des Erfindungsgedankens das zu reinigende Gas in der ersten Reinigungsstufe komprimiert und ein Teil der Verunreinigungen kondensiert und aus dem Gas abgeschieden. Die für die Verdichtung des zu reinigenden Gases erforderliche Energie wird, wie bereits ausgeführt, aus der zweiten Reinigungsstufe genommen, in der die freiwerdende Energie unter Zwischenschaltung einer Brennkraftmaschine in mechanische Energie umgewandelt wird.

Mit Vorteil wird bei der Erfindung die in der zweiten Reinigungsstufe durch Verbrennung freiwerdende Wärmeenergie in einer Brennkraftmaschine in mechanische Energie umgewandelt, womit wiederum die erste Reinigungsstufe betrieben werden kann. So kann beispielsweise als Wärmekraftmaschine ein Gasmotor oder eine Gasturbine mit dem mit Restverunreinigungen beladenen Gas durch Verbrennen der Verunreinigungen angetrieben werden. Mittels eines derartigen Gasmotors oder einer derartigen Gasturbine kann in einer Ausgestaltung des Erfindungsgedankens der Verdichter einer Kälteanlage angetrieben werden.

Erfindungsgemäß ist es auch möglich, die gewonnene Energie auch anderweitig außerhalb des Reinigungssystems zu verwenden, wenn es unzweckmäßig wäre, diese freigewordene Energie weiter im System zu verwenden. In diesem Fall kann die überschüssige Energie z.B. zur Erzeugung von Strom umgewandelt werden.

Mit Vorteil wird nach einer anderen Ausgestaltung des Erfindungsgedankens die Kondensation der ersten Reinigungsstufe in mehreren Druck- und Kühlstufen durchgeführt, wobei es möglich ist, das Kondensat einer Druck-und Kühlstufe als Kühlmittel in der folgenden Druck-und Kühlstufe zu verwenden.

Mit Vorteil wird bei der Erfindung das zu reinigende Gas in der ersten Reinigungsstufe durch eine semipermeable Membran geleitet, wobei ein Teil der Verunreinigungen vom zu reinigenden Gas getrennt wird.

Erfindungsgemäß wird der zum Betreiben der semipermeablen Mebran nötige Druck durch einen Kompressor erzeugt, der wiederum durch die in der zweiten Reinigungsstufe freiwerdende Energie gespeist wird. Die dafür erforderliche mechanische Energie wird unter Zwischenschaltung einer Brennkraftmaschine aus der zweiten Reinigungsstufe gewonnen. Ein Vorteil dieser Ausgestaltung des Erfindungsgedankens ist ein geringerer apparativer Aufwand.

Nach Anspruch 7 der Erfindung kann die erste Reinigungsstufe so betrieben werden, da@ die Menge der nach der ersten Reinigungsstufe im Gas verbliebenen Menge der Verunreinigungen ausreicht, um mit Hilfe der in der zweiten Reinigungsstufe freiwerdenden Energie die erste Reinigungsstufe zu betreiben. Erfindungsgemäß bringt dieses Verfahren den wirtschaftlichen Vorteil, daß die erste Reinigungsstufe vollständig ohne Fremdenergie, d.h. Energie, die von außen dem System zugeführt wird, abläuft.

Eine vorteilhafte Anwendung findet das erfindungsgemäße Verfahren in der Rückgewinnung von Vergaserkraftstoffen beim Verladen oder Umfüllen von Kraftstoffen. Das in den Kraftstoffbehältern entstehende Luft- Kohlenwasserstoff-Gemisch kann erfindungsgemäß nach den Reinigungsstufen in Kraftstoff und in nach den geltenden behördlichen Vorschriften gereinigte Luft aufgespalten werden. Durch diese Maßnahme wird in äußerst wirtschaftlicher Weise aus dem beim Umschlagen von Vergaserkraftstoffen in hohem Maße entstehende Luft-Kraftstoff-Gemisch der kostspielige Kraftstoff ausgefiltert und wiedergewonnen.

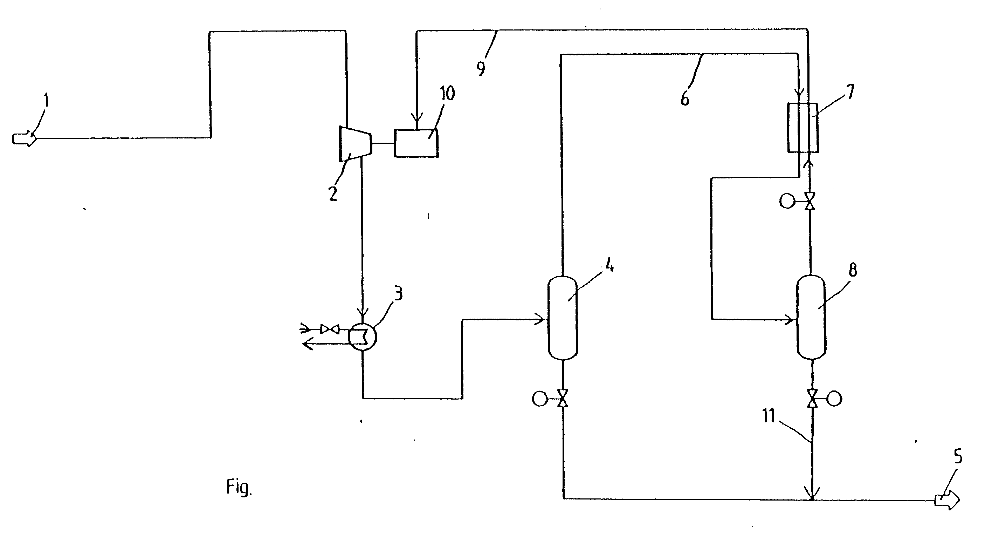

Im folgenden soll anhand eines in der Zeichnung dargestellten Beispiels die Erfindung näher beschrieben werden. Die Figur zeigt ein Verfahrensschema mit einer Kompressions-und Abscheidungsstufe gekoppelt mit einer Gasturbine.

In der Figur ist in detaillierter Form ein Ausführungsbeispiel der Erfindung zur Benzinrückgewinnung abgebildet. Das zu trennende Benzin- Luft-Gemisch wird über eine Leitung 1 einer Kompressionsanlage 2 zugeführt. Unter Druck von beispielsweise 6 bar und nach Abkühlung in einem Wärmetauscher 3 wird in einem Abscheider 4 aus dem Benzin-Luft-Gemisch zu einem überwiegenden Teil Benzin auskondensiert und abgetrennt. Das zurückgewonnene Benzin wird über Leitung 5 einem Benzinreservoir zugeführt. Der noch verbleibende Rest des Benzin-Luft-Gemisches wird erfindungsgemäß weiterbehandelt und durchläuft eine Kältefalle 7 mit nachfolgender Trennung in einem weiteren Abscheider 8. Somit wird stufenweise die mit Benzin vermischte Luft gereinigt und gleichzeitig das kostspielige Benzin zurückgewonnen.

Gemäß dem dargestellten Ausführungsbeispiel wird verbleibendes Benzin-Luft-Gemisch in Leitung 9 einer Brennkraftmaschine 10, in diesem speziellen Fall einer Gasturbine zugeführt. Durch Verbrennen des Benzin-Luft-Gemisches in der Gasturbine 10 wird die gewonnene Verbrennungswärme unmittelbar in mechanische Energie umgewandelt. Mit der Gasturbine 10 kann der Kompressor 2 der Kompressionsanlage angetrieben werden. Über eine Leitung 11 wird das abgeschiedene Benzin vom Abscheider 8 einem Benzinreservoir zugeführt.

**Patentansprüche**

1. Verfahren zum Rückgewinnen von flüssigen Kohlenwasserstoffen aus einem beim Einfüllen von flüssigen Kohlenwasserstoffen in einen Tank entstehenden gasförmigen Kohlenwasserstoff-Luft-Gemisch (1), bei dem das Gemisch (1) in zwei aufeinanderfolgenden Reinigungsstufen behandelt wird, wobei die nach der ersten Reinigungsstufe in dem Gemisch (6) noch verbliebenen gasförmigen Kohlenwasserstoffe in einer zweiten Reinigungsstufe (10) verbrannt werden und wobei die dabei freiwerdende Energie nutzbar verwendet wird, dadurch **gekennzeichnet,** daß die Verbrennung der zweiten Reinigungsstufe in einer Brennkraftmaschine (10) erfolgt und die dabei freiwerdende Energie zum Betreiben der ersten Reinigungsstufe verwendet wird.

2. Verfahren nach Anspruch 1, dadurch **gekennzeichnet,** daß die Energie der Brennkraftmaschine (10) eine Kompressionsanlage (2) betreibt, mit der das Gemisch (1) verdichtet wird.

3. Verfahren nach Anspruch 2, dadurch **gekennzeichnet,** daß das verdichtete Gemisch in einem Kühler (3) gekühlt wird und das dabei gewonnene Kondensat in einem Abscheider (4) abgeschieden wird.

4. Verfahren nach Anspruch 3,
dadurch **gekennzeichnet,**
daß die Kondensation in mehreren Druck- und Kühlstufen durchgeführt wird, wobei das Kondensat einer Druck- und Kühlstufe als Kühlmittel in der folgenden Druck- und Kühlstufe verwendet wird.

5. Verfahren nach Anspruch 1,
dadurch **gekennzeichnet,**
daß die Energie der Brennkraftmaschine einen Verdichter einer Kälteanlage betreibt, deren Kälte das Gemisch (1) teilweise kondensiert.

6. Verfahren nach Anspruch 2,
dadurch **gekennzeichnet,**
daß das verdichtete Gemisch durch eine semipermeable Membran geleitet wird und dabei ein Teil der Kohlenwasserstoffe vom Gemisch getrennt werden.

7. Verfahren nach einem der Ansprüche 1 bis 6,
dadurch **gekennzeichnet,**
daß die erste Reinigungsstufe so betrieben wird, daß die Menge der nach der ersten Reinigungsstufe im Gemisch verbleibenden Kohlenwasserstoffe ausreicht, um mit Hilfe der in der zweiten Reinigungsstufe freiwerdenden Energie die erste Reinigungsstufe zu betreiben.

8. Verfahren nach Anspruch 1,
dadurch **gekennzeichnet,**
daß die in der Brennkraftmaschine erzeugte überschüssige Energie anderweitig verwendet wird.

9. Verfahren nach Anspruch 8,
dadurch **gekennzeichnet,**
daß die überschüssige Energie zur Erzeugung von Strom verwendet wird.

## Claims

1. A process for the recovery of liquid hydrocarbons from a hydrocarbon-air mixture (1), produced by filling liquid hydrocarbons into a tank with treating of said mixture in two successive purification steps, with combustion of the remaining hydrocarbon gases (6) in a second purification step (10) and with using the released thermal energy **characterized in that** in the second purification step the released energy is used in a internal combustion engine (10) to energize the first purification step.

2. A process according to claim 1 **characterized in that** the energy of the combustion engine (10) energizes a compressor (2) to compress the mixture (1).

3. A process according to claim 2 **characterized in that** the compressed mixture is cooled down in a cooler (3) and that the so produced condensate is separated in a separator.

4. A process according to claim 3 **characterized in that** the condensation is performed in several pressure and cooling stages, with using the condensate of a pressure and cooling stage as a cooling medium for the following pressure and cooling stage.

5. A process according to claim 1 **characterized in that** the energy of the combustion engine energizes the compressor of a refrigeration unit whilst the cooling medium condensates the mixture (1) partially.

6. A process according to claim 2 **characterized in that** the compressed mixture is the feed for a semipermeable membrane where the hydrocarbons are partially separated from the mixture.

7. A process according to one of the claims 1 to 6 **characterized in that** the first purification step is operated so that the amount of hydrocarbons remaining in the mixture after the first purification step is sufficient to operate the first purification step with the generated energy.

8. A process according to claim 1 **characterized in that** the released excess energy of the combustion engine is used in another manner.

9. A process according to claim 8 where in the released excess energy is used to generate electric energy.

## Revendications

1. Procédé pour la récupération d'hydrocarbures liquides hors d'un mélange d'hydrocarbures gazeux et air (1) qui se forme lors du remplissage des hydrocarbures liquides dans un réservoir, procédé par lequel le mélange (1) est traité en deux étapes de purification, selon lesquelles les hydrocarbures gazeux qui restent dans le mélange (6) après la première étape de purification sont brulés dans une seconde étape de purification (10), si bien qu'on utilise l'énergie ainsi libérée,

characterisé en ce que la combustion de la seconde étape de purification est réalisée dans une machine à combustion interne (10) et l'énergie ainsi libéré est utilisée pour la première étape de purification.

2. Procédé selon la revendication 1, characterisé en ce que l'énergie de la machine à combustion (10) opère une machine à compression (2), par laquel le mélange (1) est comprimé.

3. Procédé selon la revendication 2, characterisé en ce que le mélange comprimé est refroidisé dans un refroidisseur et que le liquide condensé gagné est séparée dans un séparateur (4).

4. Procédé selon la revendication 3, characterisé en ce que la condensation est réalisée pendant plusieurs étapes de pression et refroidissement, le liquide condensé pendant une étape de pression et refroidissement étant utilisé comme moyen de refroidissement dans l'étape de pression et refroidissement suivante.

5. Procédé selon la revendication 1, characterisé en ce que l'énergie de la machine à combustion interne opère un compressor d'une machine à refrigeration, la froideur de laquel condense partiellement le mélange (1).

6. Procédé selon la revendication 2, characterisé en ce que le mélange condensée est conduite à travers une membrane semiperméable et que par cela une partie des hydrocarbures est séparée du mélange.

7. Procédé selon une des revendications 1 à 6, characterisé en ce que la première étape de purification est opére de la sorte que la quantité des hydrocarbures restants dans le mélange après la première étape de purification est suffisante pour opérer la première étape de purification à l'aide de l'énergie libérée dans la seconde étape de purification.

8. Procédé selon la revendication 1, characterisé en ce que l'énergie excédentaire produite dans la machine à combustion interne est utilisé ailleurs.

9. Procédé selon la revendication 8, characterisé en ce que l'énergie excédentaire est utilisée pour la production de courant électrique.

Fig.